# EUROPÄISCHE PATENTSCHRIFT

(11) **EP 1 157 670 B1**
(45) Veröffentlichungstag und Bekanntmachung des Hinweises auf die Patenterteilung: **19.07.2006**
(21) Anmeldenummer: 01112527.5
(22) Anmeldetag: 23.05.2001
(51) Int. Cl.: A61C 1/08

(54) **Zahnärztliches Handstück mit Mitteln zum Verspannen einer Griffhülse mit einem Kopfteil**
Dental handpiece with devices for tensioning a grip-sleeve with a head part
Pièce à main dentaire avec des moyens de serrage d'un manche avec une pièce de la tête

(30) Priorität: 24.05.2000 DE 10025421
(43) Veröffentlichungstag der Anmeldung: 28.11.2001
(73) Patentinhaber: Sirona Dental Systems GmbH, 64625 Bensheim (DE)
(72) Erfinder: Goisser, Siegfried, 64683 Einhausen (DE); Hain, Johann, 64646 Heppenheim (DE)
(74) Vertreter: Sommer, Peter

(56) Entgegenhaltungen:
- DE-C- 19 525 755
- US-A- 4 348 180
- US-A- 4 792 304

## Beschreibung

### Technisches Gebiet

Die Erfindung betrifft ein zahnärztliches Handstück, umfassend ein Kopfteil und eine daran anliegende Griffhülse sowie Mittel zum Verspannen der Griffhülse mit dem Kopfteil.

### Stand der Technik

Aus der EP-A-0 753 286 ist ein Handstück bekannt, bei dem eine Griffhülse zwischen einem Kopfteil und einer endseitig an der Griffhülse angeordneten Scheibe mittels einer innerhalb der Griffhülse liegenden eigensteife Trägerstruktur verspannt wird. Dabei sitzt die Griffhülse auf der Scheibe auf und wird über diese Scheibe gegen die Trägerstruktur verspannt.
Die Aufgabe der Erfindung besteht darin, ein Handstück bereitzustellen, welches noch einfacher aufgebaut ist und gleichwohl eine hinreichende Stabilität aufweist.

### Darstellung der Erfindung

Dadurch, daß an dem dem Kopfteil abgewandten Ende der Griffhülse ein im Inneren der Griffhülse angeordnetes Trägerteil vorgesehen ist, daß innerhalb der Griffhülse ein Verbindungsmittel angeordnet ist, welches sich von dem Trägerteil bis zu dem Kopfteil erstreckt und dort jeweils befestigt ist, wobei das Kopfteil, die Griffhülse und das Trägerteil über das Verbindungsmittel gegeneinander verspannt werden können, wird ein einfacher Aufbau des Handstücks ermöglicht.

Gemäß einer Weiterbildung der Erfindung ist das Kopfteil in einem Winkel zu dem Trägerteil angeordnet derart, daß ein zahnärztliches Winkelstück vorliegt. Dabei ist das Verbindungsmittel gegenüber einer Mittelachse des Handstücks in einem Winkel angeordnet. Durch die besonderen Verhältnisse in einem Winkelstück mit der Erfordernis des einfachen Zusammenbaus unter Berücksichtigung des Winkels oder der Krümmung werden an die Verbindung besondere Ansprüche gestellt, die hiermit erfüllt sind.

Vorteilhafterweise sind der Winkel des Winkelstücks und der Winkel des Verbindungsmittels unterschiedlich, insbesondere ist der Winkel des Verbindungsmittels kleiner als der Winkel des Winkelstücks. Dadurch wird eine bessere Verteilung der Kräfte erreicht.

Dadurch, daß zwischen der Griffhülse und dem Kopfteil eine Dichtung angeordnet ist, wobei die Dichtung durch die Verbindungsmittel unter Vorspannung setzbar ist, wird mit demselben Verbindungsmittel das Kopfteil sowohl mit der Griffhülse verbunden als auch die Abdichtung des Kopfteils gegen die Griffhülse hergestellt. Vorteilhafterweise steht die Dichtung nach dem Zusammenbau unter Vorspannung, um die erforderlichen Dichtkräfte aufzubringen.

In einer erfindungsgemäßen Weiterbildung weist die Griffhülse Verbindungsmittel zur Verbindung mit einer Außenhülse, insbesondere der Außenhülse eines Kupplungsteils auf. Dadurch wird die Steifigkeit der Griffhülse ausgenutzt.

Vorteilhafterweise ist das Trägerteil über Verbindungsmittel mit einem Kupplungsteil verbindbar. Insbesondere dann, wenn die Verbindungsmittel derart ausgestaltet sind, daß das Trägerteil mit dem Kupplungsteil eine selbstständig handhabbare Einheit bildet, lassen sich die einzelnen Baugruppen des Handstücks in einfacher Weise beim Zusammenbau miteinander verbinden.

Durch Rastmittel, insbesondere Rastöffnungen am Trägerteil und dazu entsprechende Rastmittel, insbesondere Rastvorsprünge am Kupplungsteil, die beim Zusammenfügen ineinander lösbar einschnappen, wird der Zusammenbau begünstigt.

Dadurch, daß die Griffhülse mit der Außenhülse über die Verbindungsmittel derart zusammenwirkt, daß die Verbindung zwischen dem Trägerteil und dem Kupplungsteil durch Verspannen des Kupplungsteils gegen das Trägerteil gesichert ist, wird ein selbsttätiges Lösen der Verbindung zwischen dem Trägerteil und dem Kupplungsteil vermieden.

Eine erfindungsgemäße Weiterbildung sieht vor, daß zwischen dem Kopfteil und der Griffhülse eine Verdrehsicherung angeordnet ist. Damit wird ein Verdrehen der Griffhülse gegenüber dem Kopfteil und damit auch einer Verdrehung der in der Griffhülse verlaufenden und in dem Trägerteil gehaltenen Versorgungsleitungen, insbesondere des Lichtleiters, verhindert.

Vorteilhafterweise ist die Verdrehsicherung abgedichtet, vorzugsweise mittels einer zwischen Kopfteil und Griffhülse angeordneten Dichtung, um ein Austritt des Pflegemittels oder der Rückluft ein Eindringen von Schmutz in den Innenraum der Griffhülse zu verhindern. Die Verwendung der bereits vorhandenen Dichtung zwischen Kopfteil und Griffhülse vermeidet dabei zusätzlichen Aufwand.

Die Verdrehsicherung kann als Feder- Nutverbindung zwischen einem Schaft des Kopfteils und einem Ende der Griffhülse ausgebildet sein, wobei vorzugsweise die Nut in der Griffhülse und die Feder im Schaft angeordnet ist.

Um aufgrund von Fertigungstoleranzen und der Zugspannung beim Zusammenbau auftretende undefinierte Spannungszustände in der Dichtung zwischen Kopfteil und Griffhülse zu vermeiden, kann diese als Radialdichtung ausgebildet sein. Auf ihrer Innenseite liegt die Dichtung auf einer Außenfläche eines Schaft des Kopfteils auf und auf ihrer Außenseite liegt die Dichtung auf einer Innenfläche der Griffhülse auf, wobei die Dichtung in axialer Richtung zu einem Axialanschlag des Kopfteils und/oder zu einem Axialanschlag des Griffstücks beabstandet ist. Damit ist sichergestellt, dass die Dichtung in axialer Richtung nicht belastet wird, sondern ausschließlich in radialer Richtung unter Vorspannung gesetzt wird.

Vorteilhafterweise erstreckt sich vom Trägerteil zum Kopfteil hin innerhalb der Griffhülse ein Lichtleiter, der an seiner Lichtaustrittstelle im Kopfteil elastisch gehalten und gegen das Kopfteil und die Griffhülse abgedichtet ist. Weiterhin ist ein innerhalb der Griffhülse angeordnetes, vom Trägerteil her einzustellendes Justiermittel für die Lage einer Lichtaustrittsfläche des Lichtleiters bezüglich der Außenkontur der Griffhülse an der Lichtaustrittsstelle vorgesehen.

Die Justiervorrichtung ist gegen das Kopfteil und/oder eine Verlängerung des Kopfteils in der Griffhülse längsverschieblich gehalten und mittels einer Verstellvorrichtung in ihrer Lage bezüglich des Kopfteils veränderbar. Die Lageveränderung ist derart, daß die Lage der Lichtsaustrittsfläche des Lichtleiters in seiner Winkellage und damit im Abstand zur Außenwand der Griffhülse verändert wird.

### Kurzbeschreibung der Zeichnung

In der Zeichnung ist ein Ausführungsbeispiel der Erfindung dargestellt. Es zeigt die
- Fig. 1: ein zahnärztliches Handstück gemäß der Erfindung als Explosionszeichnung, die
- Fig. 2: einen Längsschnitt durch ein zusammengebautes zahnärztliches Handstück gemäß Fig. 1, die
- Fig. 3: einen Schnitt außerhalb der Längsachse entlang eines Verbindungsmittels aus Fig. 1, die
- Fig. 4: eine Vergrößerung eines Kopfteils, die
- Fig. 5: das Prinzip der Verdrehsicherung zwischen der Griffhülse und dem Kopfteil und die
- Fig. 6: ein Justiermittel für einen Lichtleiter.

### Ausführungsbeispiel

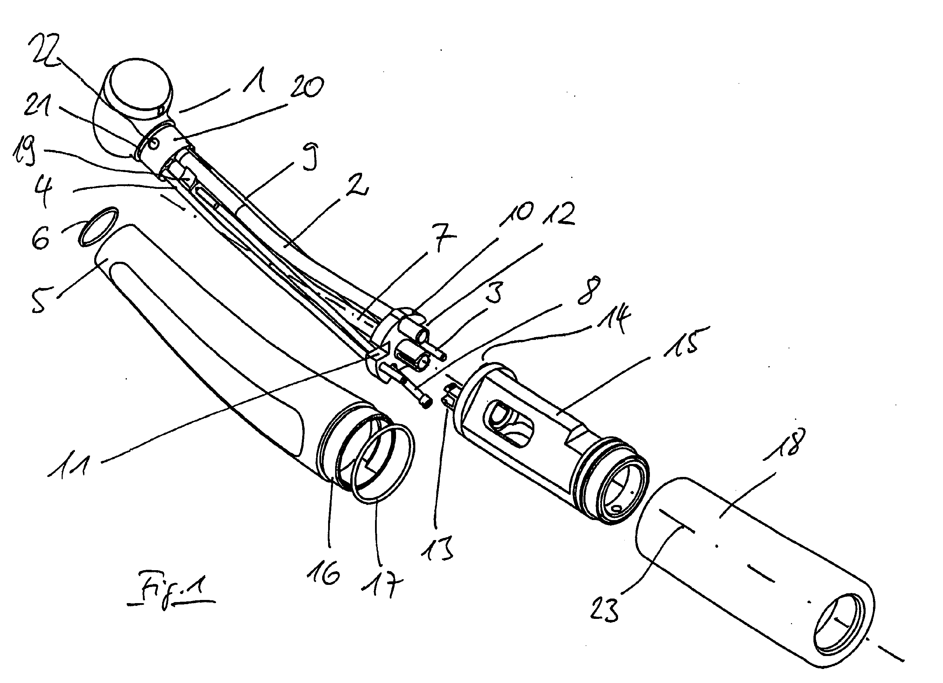

In Fig. 1 ist ein zahnärztliches Handstück gemäß der Erfindung als Explosionszeichnung dargestellt. Das zahnärztliches Handstück umfasst einen Kopfteil (1), an welchem Versorgungsleitungen (2,3,4) angeschlossen sind, die von einer Griffhülse (5) abgedeckt werden. Zwischen dem Kopfteil (1) und der Griffhülse (5) ist eine Dichtung (6) angeordnet, die den Innenraum der Griffhülse (5) mit den darin befindlichen Versorgungsleitungen (2,3,4) abdichtet.

Innerhalb der Griffhülse (5) sind weiterhin ein Lichtleiter (7) und Verbindungsmittel (8,9) in Form von Spannschrauben angeordnet, die in einem Trägerteil (10), zusammen mit den Versorgungsleitungen (2,3,4) gehalten sind.

Das Trägerteil (10) weist zwei einander gegenüberliegende Rastöffnungen (11,12) auf, die mit Rastvorsprüngen (13,14) eines Kupplungsteils (15) zusammenwirken. Das Kupplungsteil (15) lässt sich über diese Rastverbindung an dem Trägerteil (10) befestigen.

Die Griffhülse (5) weist an ihrem dem Kopfteil (1) abgewandten Ende ein Gewinde (16) und eine weitere Dichtung (17) auf, die mit einer über das Kupplungsstück (15) hin aufschiebbaren Außenhülse (18) zusammenwirken.

Zur Lagejustierung der Versorgungsleitungen (2,3,4) im Bereich des Kopfteils (1) ist ein Abstandshalter (19) vorgesehen, darüber hinaus ist an einem Schaft (29) des Kopfteils (1), der von einem Ende der Griffhülse (5) umschlossen wird, eine Nut (21) zur Aufnahme des Dichtrings (6) sowie eine weitere Nut (22) zur Aufnahme einer Feder vorgesehen, die mit einer entsprechenden Nut innerhalb der Griffhülse (5) zusammenwirkt und eine Verdrehsicherung der Griffhülse gegen das Kopfteil (1) darstellt.

Bei dem zahnärztlichen Handstück handelt es sich um ein Winkelstück, das heißt das Kopfteil (1) ist gegenüber einer Längsachse (23) abgewinkelt.

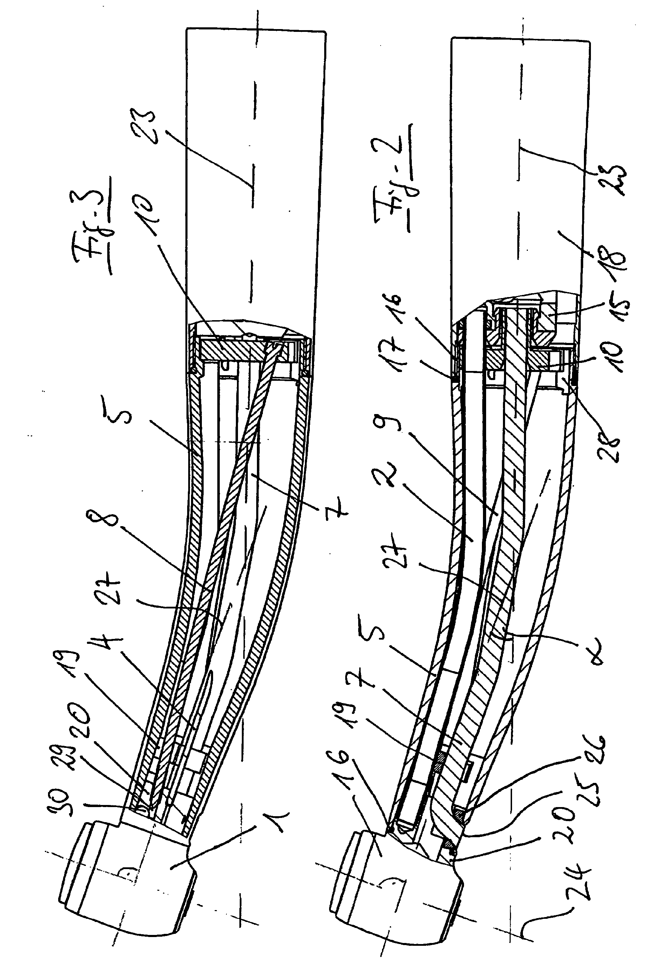

In Fig. 2 ist ein Längsschnitt durch ein zusammengebautes zahnärztliches Handstück gezeigt. Zu erkennen ist zunächst die Ausbildung des Handstücks als Winkelstück, wobei das Kopfteil (1) gegenüber der Mittelachse (23) des Handstücks um einen Winkel α abgewinkelt ist. Dies hat zur Folge, daß die Drehachse (24) des nicht dargestellten, im Kopfteil (1) gehaltenen Bearbeitungswerkzeugs schräg zur Mittelachse (23) angeordnet ist.

Das Kopfteil (1) ist am verjüngten Ende der konisch zulaufenden Griffhülse (5) angeordnet und nimmt in seinem Schaft (20) die Versorgungsleitung (2) sowie den Lichtleiter (7) mit der Lichtaustrittsstelle (25) auf. Der Lichtleiter (7) ist im Bereich der Lichtaustrittstellen (25) durch ein elastisches Bauteil (26) abgedichtet und gehalten. Der Lichtleiter (7) ist dabei gegen den Halter (19) rückseitig abgestützt, wobei der Halter (19) selbst längsverschieblich entlang der in diesem Bereich als steifes Röhrchen ausgebildeten Versorgungsleitung (2) geführt ist. Dadurch lässt sich der Abstand der Lichtaustrittstelle (25) zur Mittelachse (27) des Kopfteils einstellen. Die Einstellmittel für den Halter (19) sind nicht dargestellt, diese können aber als im Trägerteil (10) gehaltene Stellschrauben ausgeführt sein. Ebenso ist eine Vorpositionierung und eine Befestigung durch Reibschluß oder Formschluss möglich.

Zwischen dem verjüngten Ende der Griffhülse (5) und dem Schaft (20) des Kopfteils (1) ist der Dichtring (6) angeordnet. Am anderen Ende der Griffhülse (5) ist das Trägerteil (10) angeordnet, in welchem der Lichtleiter (7) und die Versorgungsleitung (2) geführt sind. Darüber hinaus ist das Verbindungsmittel (9) im Trägerteil (10) gehalten, wie später erläutert wird. Das Trägerteil (10) ist gegen die Griffhülse (5) abgestützt und liegt dazu auf einem im Inneren der Griffhülse (5) angeordneten Vorsprung (28) auf.

Über das Gewinde (16) der Griffhülse (5) ist die das Kupplungsstück (15) umhüllende Außenhülse (18) an der Griffhülse (5) befestigt, wobei zum Zweck der Abdichtung der Griffhülse (5) gegen die Außenhülse (18) die Dichtung (17) vorgesehen ist. Das gesamte Handstück lässt sich somit öldicht verbinden. Das Kupplungsstück (15) ist in das Trägerteil (10) eingerastet und wird über die Außenhülse (18) verspannt.

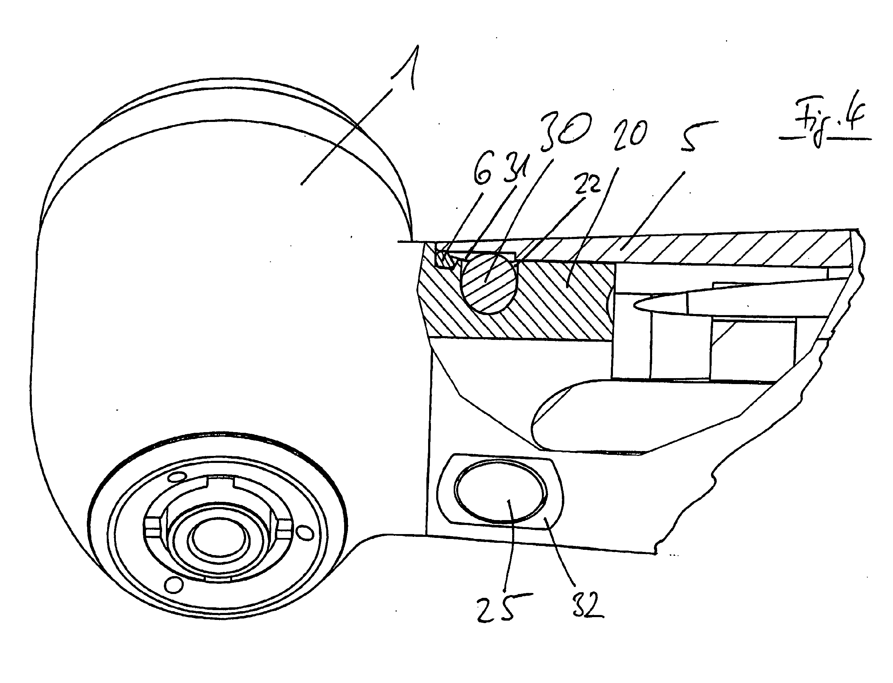

In Fig. 3 ist ein Schnitt außerhalb der Längsachse entlang des Verbindungsmittels (8) aus Fig. 1 gezeigt. Es ist zu erkennen, daß das Verbindungsmittel (8) in eine entsprechende Bohrung (29) des Schaftes (20) mittels eines Gewindes eingeschraubt ist. Das andere Ende des Verbindungsmittels (8) ist als Schraubenkopf ausgebildet und in dem Trägerteil (10) gehalten. Das Verbindungsmittel (8) ist in seiner Lage so angeordnet, daß das im Trägerteil (10) angeordnete Ende unterhalb der Mittelachse (23) und das das im Schaft (20) verschraubte Ende oberhalb der Mittelachse (23) liegt. Der Winkel, in welchem das Verbindungsmittel (8) verläuft, unterscheidet sich gleichwohl von dem Winkel des Winkelstücks derart, daß das Verbindungsmittel in einem kleineren Winkel zu der Mittelachse (23) steht als der Winkel des Winkelstücks.

Gegenüber der Darstellung aus Fig. 1 ist im Schaft (20) eine Kugel (30) angeordnet, die eine Verdrehsicherung der Griffhülse (5) gegen das Kopfteil (1) beziehungsweise den Schaft (20) sicherstellt. Die Funktionsweise wird nachstehend erläutert.

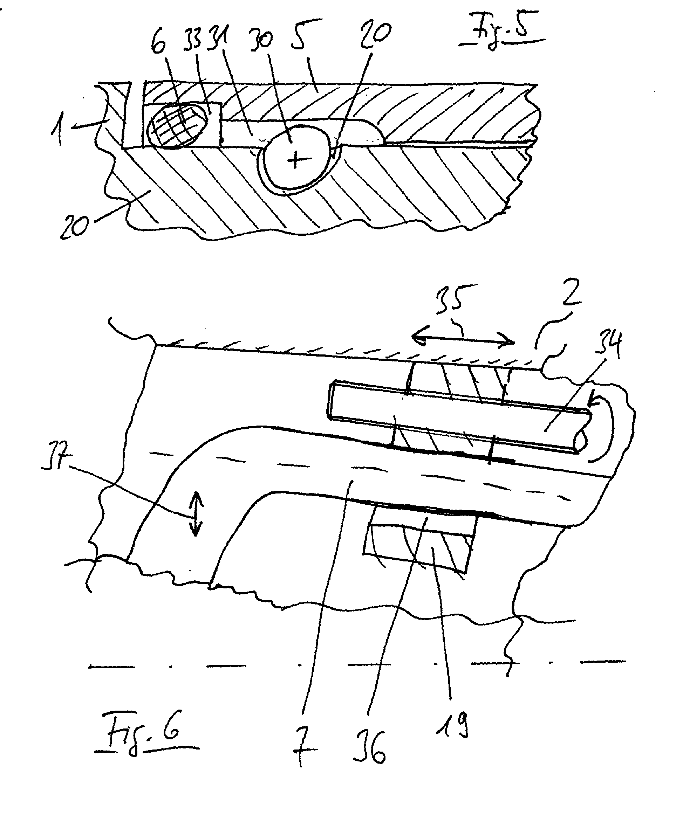

In Fig. 4 ist eine Vergrößerung des Kopfteils 19 mit dem sich daran anschließenden Schaft 20 in teilgebrochener Darstellung als Schnitt durch die Kugel (30) gezeigt. In dem Schaft (20) ist eine erste Nut zur Aufnahme der Dichtung (6) am Übergang des Griffstücks (5) zum Kopfteil (1) vorgesehen, in der die Dichtung (6) zwischen dem äußeren Ende der Griffhülse (5) und dem Kopfteil (1) beziehungsweise dem Schaft (29) angeordnet ist. Zu der Dichtung (6) in Richtung der Griffhülse (5) beabstandet ist eine Kugel (30) als Beispiel einer Feder einer Nut - Federverbindung in eine Ausnehmung (22) eingelassen und ist vorzugsweise leicht verklemmt, um dem Herausfallen beim Auseinanderbauen des Kopfstücks (1) und der Griffhülse (5) ist eine Nut (31) eingearbeitet, die der Kugel (30) gegenüberliegt und in die die Kugel (30) teilweise hineinragt. Die Nut (31) erstreckt sich bis zum Ende der Griffhülse (5), an dem der Dichtring (6) anliegt. Anhand der hier gezeigten Darstellung ergibt sich von selbst, daß ein Verdrehen der Griffhülse (5) gegen das Kopfteil (1) an dem Formschluss der Nut (31) mit der in der Ausnehmung (22) gehaltenen Kugel (30) verhindert wird.

In Fig. 4 lässt sich auch die Lichtaustrittstelle (25) des Lichtleiters sowie die dafür vorgesehene Vertiefung (32) in der Außenfläche der Griffhülse (5) erkennen.

In Fig. 5 ist das Prinzip der Verdrehsicherung im Zusammenspiel mit der Dichtung (6) zwischen der Griffhülse (5) und dem Kopfteil (1) beziehungsweise dem Schaft (20) dargestellt, wobei hier in Abweichung zu der darstellungsgemäßen Fig. 2 und Fig. 4 die Dichtung (6) als reine Radialdichtung ausgebildet ist. Das Ende der Griffhülse (5) ist dazu mit einer umlaufenden Nut (33) versehen, die sowohl zum Ende der Griffhülse (5) als auch zum Inneren der Griffhülse (5) geöffnet ist. Die dem Kopfstück (1) abgewandte Seitenwand der Nut stellt einen Axialanschlag für die Dichtung (6) dar, wobei der zweite Axialanschlag für die Dichtung (6) von dem Kopfstück (1) selbst gebildet wird.

Ein Verschieben der Griffhülse (5) zu dem Kopfteil (1) in vermag die Vorspannung der Dichtung (6) nicht zu verändern, da die Dichtung (6) ausschließlich radial eingespannt ist. Alternativ hierzu ist es möglich, die Dichtung auch axial zu belasten, wie in Fig. 4 gezeigt, in dem die Dichtung über die Seitenwand der Nut (33) gegen die Seitenwand des Kopfteils (1) gedrückt wird. Bei dieser Art ist darauf zu achten, daß ein Ausgleichsraum für das Material der sich verformenden Dichtung (6) innerhalb der Nut (33) vorgesehen ist.

Ausgehend von der Aufnahmenut (33) für die Dichtung (6) ist eine Längsnut (31) in den Innenumfang der Griffhülse (5) eingearbeitet, in die eine in dem Schaft (20) des Kopfteils (1) eingelassene Kugel (30) ein Stück weit eingreift. Die Nut (31) ist dabei so bemessen, daß die Griffhülse (5) über die Kugel (30) in Längsrichtung verschiebbar ist, in Querrichtung aber durch den Formschluss zwischen der Kugel (30) und der Nut (31) gegen Verdrehen gesichert ist. Aufgrund der Anordnung der Verdrehsicherung in dem durch die Dichtung (6) abgedichteten Bereich der Griffhülse ist ein Austreten von Pflegemittel oder Rückluft sowie von Schmutz über die Verdrehsicherung selbst ausgeschlossen.

In Fig. 6 ist schließlich der als Justiermittel ausgebildete Halter (19) gezeigt, welches an der starren Versorgungsleitung (2) abgestützt ist und welches über Verstellmittel (34) in Richtung des Pfeils (35) verschiebbar ist. Dabei wir der Lichtleiter (7) in einer Öffnung (36) des Justiermittels (19) geführt und in Richtung des Pfeils (37) in seiner Winkellage ausgelenkt. Wesentlich ist hierbei, daß die Führungsfläche der Versorgungsleitung (2) und der Lichtleiter (7) in einem Winkel zueinander angeordnet sind, so daß ein Verschieben in Richtung des Pfeils (35) eine Abstandsänderung des Lichtleiters (7) zur Versorgungsleitung (2) hervorruft. Auf diese Weise ist es möglich, den über ein elastische Bauteil (26) befestigten Lichtleiter (7) im Bereich der Lichtaustrittstelle (25) bezüglich seiner Lage zur Außenfläche der Griffhülse (5) zu justieren.

## Patentansprüche

1. Zahnärztliches Handstück, umfassend ein Kopfteil (1) und eine daran anliegende Griffhülse (5) sowie Mittel zum Verspannen der Griffhülse (5) mit dem Kopfteil (1), **dadurch gekennzeichnet, daß** an dem dem Kopfteil (1) abgewandten Ende der Griffhülse (5) ein im Inneren der Griffhülse angeordnetes Trägerteil (10) vorgesehen ist, daß innerhalb der Griffhülse (5) ein Verbindungsmittel (8,9) angeordnet ist, welches sich von dem Trägerteil (10) bis zu dem Kopfteil (1) erstreckt und dort jeweils befestigt ist, wobei das Kopfteil, die Griffhülse und das Trägerteil (10) über das Verbindungsmittel (8,9) gegeneinander verspannt werden können.

2. Zahnärztliches Handstück gemäß Anspruch 1, **dadurch gekennzeichnet, daß** das Kopfteil (1) in einem Winkel zu dem Trägerteil (10) angeordnet ist derart, daß ein zahnärztliches Winkelstück vorliegt und daß das Verbindungsmittel (8,9) gegenüber einer Mittelachse (23) des Handstücks in einem Winkel angeordnet ist.

3. Zahnärztliches Handstück gemäß Anspruch 2, **dadurch gekennzeichnet, daß** der Winkel des Winkelstücks und der Winkel des Verbindungsmittels (8,9) unterschiedlich sind, insbesondere, daß der Winkel des Verbindungsmittels (8,9) kleiner als der Winkel des Winkelstücks ist.

4. Zahnärztliches Handstück nach einem der Ansprüche 1 bis 3, **dadurch gekennzeichnet, daß** zwischen der Griffhülse (5) und dem Kopfteil (1) eine Dichtung (6) angeordnet ist, wobei die Dichtung (6) durch die Verbindungsmittel (8,9) unter Vorspannung setzbar ist.

5. Zahnärztliches Handstück gemäß Anspruch 4, **dadurch gekennzeichnet, daß** die Dichtung (6) unter Vorspannung steht.

6. Zahnärztliches Handstück nach einem der Ansprüche 1 bis 5, **dadurch gekennzeichnet, daß** die Griffhülse (5) Verbindungsmittel (16) zur Verbindung mit einer Außenhülse (18), insbesondere der Außenhülse (18) eines Kupplungsteils (15) aufweist.

7. Zahnärztliches Handstück nach einem der Ansprüche 1 bis 6, **dadurch gekennzeichnet, daß** das Trägerteil (10) über Verbindungsmittel (11 bis 14) mit einem Kupplungsteil verbindbar ist.

8. Zahnärztliches Handstück gemäß Anspruch 7, **dadurch gekennzeichnet, daß** die Verbindungsmittel (11 bis 14) derart ausgestaltet sind, daß das Trägerteil (10) mit dem Kupplungsteil (15) eine selbstständig handhabbare Einheit bildet.

9. Zahnärztliches Handstück nach einem der Ansprüche 7 oder 8, **dadurch gekennzeichnet, daß** das Trägerteil (10) Rastmittel, insbesondere Rastöffnungen (11,12) und das Kupplungsteil (15) dazu entsprechende Rastmittel, insbesondere Rastvorsprünge (13,14) aufweist, die beim Zusammenfügen ineinander lösbar einschnappen.

10. Zahnärztliches Handstück nach einem der Ansprüche 6 und 7 bis 9, **dadurch gekennzeichnet, daß** die Griffhülse (5) mit der Außenhülse (18) über die Verbindungsmittel (16) derart zusammenwirkt, daß die Verbindung zwischen dem Trägerteil (10) und dem Kupplungsteil (15) durch Verspannen des Kupplungsteils (15) gegen das Trägerteil (10) gesichert ist.

11. Zahnärztliches Handstück nach einem der Ansprüche 1 bis 10, **dadurch gekennzeichnet, daß** zwischen dem Kopfteil (1) und der Griffhülse (5) eine Verdrehsicherung (30,31) angeordnet ist.

12. Zahnärztliches Handstück nach Anspruch 11, **dadurch gekennzeichnet, daß** die Verdrehsicherung (30,31) abgedichtet ist, vorzugsweise mittels einer zwischen Kopfteil (1) und Griffhülse (5) angeordneten Dichtung (6).

13. Zahnärztliches Handstück nach einem der Ansprüche 11 oder 12 , **dadurch gekennzeichnet, daß** die Verdrehsicherung (30,31) als Feder- Nutverbindung zwischen einem Schaft des Kopfteils und einem Ende der Griffhülse angeordnet ist, wobei vorzugsweise die Nut (31) in der Griffhülse (5) und die Feder (30) im Schaft (20) angeordnet ist.

14. Zahnärztliches Handstück nach einem der Ansprüche 4 bis 13, **dadurch gekennzeichnet, daß** die Dichtung (6) zwischen Kopfteil und Griffhülse als Radialdichtung ausgebildet ist, welche auf ihrer Innenseite auf einer Außenfläche eines Schaft (20) des Kopfteils (1) aufliegt und auf ihrer Außenseite auf einer Innenfläche der Griffhülse (5), wobei die Dichtung (6) in axialer Richtung zu einem Axialanschlag des Kopfteils (1) und/oder zu einem Axialanschlag des Griffstücks (5) beabstandet ist.

15. Zahnärztliches Handstück nach einem der Ansprüche 1 bis 14, **dadurch gekennzeichnet, daß** sich vom Trägerteil (10) zum Kopfteil (1) hin innerhalb der Griffhülse (5) ein Lichtleiter (7) erstreckt, der an seiner Lichtaustrittstelle (25) elastisch gehalten und abgedichtet ist und daß ein innerhalb der Griffhülse (5) angeordnetes, vom Trägerteil (10) her einzustellendes Justiermittel (19) für die Lage einer Lichtaustrittsfläche (25) des Lichtleiters (7) vorgesehen ist.

16. Zahnärztliches Handstück gemäß Anspruch 15, **dadurch gekennzeichnet, daß** die Justiervorrichtung (19) gegen das Kopfteil (1) und/oder eine Verlängerung des Kopfteils in der Griffhülse (5) längsverschieblich gehalten ist und mittels einer Verstellvorrichtung in ihrer Lage bezüglich des Kopfteils (1) verändert werden kann, wobei die Lageveränderung derart ist, daß die Lage der Lichtsaustrittsfläche (25) des Lichtleiters (7) in seiner Winkellage und damit im Abstand zur Außenwand der Griffhülse (5) verändert wird.

## Claims

1. A dental hand piece, comprising a head piece (1) and an adjoining sleeve-type grip (5) and means for interlocking said sleeve-type grip (5) and said head piece (1), **characterized in that** a supporting member (10) is provided at that end of said head piece (1) which is remote from said sleeve-type grip (5), which supporting member is disposed in the interior of said sleeve-type grip, and a fastening device (8, 9) is disposed within said sleeve-type grip (5) extending from said supporting member (10) to said head piece (1) and attached to both thereof, said head piece, said sleeve-type grip and said supporting member (10) being interlockable via said fastening device (8, 9).

2. A dental hand piece as defined in claim 1, **characterized in that** said head piece (1) is disposed at an angle to said supporting member (10) in such a manner that a dental angled hand piece is present and that the fastening device (8, 9) is disposed at an angle to a center axis (23) of said hand piece.

3. A dental hand piece as defined in claim 2, **characterized in that** the angle of said angled hand piece and the angle of said fastening device (8, 9) differ from each other, in particular the angle of said fastening device (8, 9) being smaller than the angle of said angled hand piece.

4. A dental hand piece as defined in any one of claims 1 to 3, **characterized in that** between said sleeve-type grip (5) and said head piece (1) there is disposed a gasket (6), which gasket (6) can be pretensioned by said fastening device (8, 9).

5. A dental hand piece as defined in claim 4, **characterized in that** said gasket (6) is pretensioned.

6. A dental hand piece as defined in any one of claims 1 to 5, **characterized in that** said sleeve-type grip (5) has fastening means (16) for the attachment of an external sleeve (18), particularly the external sleeve (18) of a coupling element (15).

7. A dental hand piece as defined in any one of claims 1 to 6, **characterized in that** said supporting member (10) can be attached to a coupling element by fastening means (11 to 14).

8. A dental hand piece as defined in claim 7, **characterized in that** said fastening means (11 to 14) are designed such that said supporting member (10) and said coupling element (15) together form an independently handable unit.

9. A dental hand piece as defined in claim 7 or claim 8, **characterized in that** said supporting member (10) has locking means, in particular lock notches (11, 12), and said coupling element (15) has corresponding locking means, in particular lock pegs (13, 14), which locking means releasably snap together when pushed against each other.

10. A dental hand piece as defined in any one of claims 6 and 7 to 9, **characterized in that** said sleeve-type grip (5) cooperates, via said fastening means (16), with said external sleeve (18) in such a manner that the connection of said supporting member (10) to said coupling element (15) is locked by bracing said coupling element (15) against said supporting member (10).

11. A dental hand piece as defined in any one of claims 1 to 10, **characterized in that** an anti-twist stop (30, 31) is disposed between said head piece (1) and said sleeve-type grip (5).

12. A dental hand piece as defined in claim 11, **characterized in that** said anti-twist stop (30, 31) is sealed, preferably by the gasket (6) disposed between said head piece (1) and said sleeve-type grip (5).

13. A dental hand piece as defined in claim 11 or claim 12, **characterized in that** said anti-twist stop (30, 31) is embodied as a key and slot connection disposed between a shaft of said head piece and one end of said sleeve-type grip, the slot (31) being preferably located in said sleeve-type grip (5) and the key (30) in said shaft (20).

14. A dental hand piece as defined in any one of claims 4 to 13, **characterized in that** said gasket (6) between said head piece and said sleeve-type grip is embodied as a radial seal, the inner side of which bears against an external surface of a shaft (20) of said head piece (1) and the outer side of which bears against an inner surface of said sleeve-type grip (5), which gasket (6) is axially spaced from an axial stop of said head piece (1) and/or from an axial stop of said sleeve-type grip (5).

15. A dental hand piece as defined in any one of claims 1 to 14, **characterized in that** an optical fiber (7) extends from said supporting member (10) to said head piece (1) within said sleeve-type grip (5), said optical fiber being elastic and sealed at its point of light emergence (25), and that adjusting means (19) are disposed within said sleeve-type grip (5) to be controlled by said supporting member (10) to regulate the position of a light-emergence surface (25) of said optical fiber (7).

16. A dental hand piece as defined in claim 15, **characterized in that** said adjusting device (19) is longitudinally displaceable in the sleeve-type grip (5) relatively to said head piece (1) and/or an extension of said head piece, and the position thereof with reference to said head piece (1) can be changed by means of a regulating device, which change of position is such that the angular position of the light-emergence surface (25) of the optical fiber (7) and thus its distance from the outside wall of said sleeve-type grip (5) is changed.

## Revendications

1. Pièce à main dentaire, comprenant une partie de tête (1) et une douille de prise (5) se raccordant à celle-ci ainsi que des moyens pour serrer la douille de prise (5) avec la partie de tête (1), **caractérisée en ce qu'**il est prévu, sur l'extrémité de la douille de prise (5) située à l'opposé de la partie de tête (1), une partie de support (10) disposée à l'intérieur de la douille de prise (5), **en ce qu'**un moyen d'assemblage (8, 9) est disposé à l'intérieur de la douille de prise (5), lequel s'étend de la partie de support (10) jusqu'à la partie de tête (1) et est chaque fois fixé à celles-ci, dans laquelle la partie de tête, la douille de prise et la partie de support (10) peuvent être serrées l'une par rapport à l'autre par le moyen d'assemblage (8, 9).

2. Pièce à main dentaire selon la revendication 1, **caractérisée en ce que** la partie de tête (1) est disposée sous un certain angle par rapport à la partie de support (10), de telle façon qu'il se forme une pièce dentaire coudée et que le moyen d'assemblage (8, 9) soit disposé sous un certain angle par rapport à l'axe central (23) de la pièce à main.

3. Pièce à main dentaire selon la revendication 2, **caractérisée en ce que** l'angle de la pièce coudée et l'angle du moyen d'assemblage (8, 9) sont différents, en particulier **en ce que** l'angle du moyen d'assemblage (8, 9) est plus petit que l'angle de la pièce coudée.

4. Pièce à main dentaire selon l'une quelconque des revendications 1 à 3, **caractérisée en ce qu'**un joint d'étanchéité (6) est disposé entre la douille de prise (5) et la partie de tête (1), dans lequel le joint d'étanchéité (6) peut être mis sous précontrainte par les moyens d'assemblage (8, 9).

5. Pièce à main dentaire selon la revendication 4, **caractérisée en ce que** le joint d'étanchéité (6) se trouve sous précontrainte.

6. Pièce à main dentaire selon l'une quelconque des revendications 1 à 5, **caractérisée en ce que** la douille de prise (5) comprend des moyens d'assemblage (16) pour l'assemblage avec une douille extérieure (18), en particulier la douille extérieure (18) d'une partie de couplage (15).

7. Pièce à main dentaire selon l'une quelconque des revendications 1 à 6, **caractérisée en ce que** la partie de support (10) peut être assemblée à une partie de couplage par des moyens d'assemblage (11 à 14).

8. Pièce à main dentaire selon la revendication 7, **caractérisée en ce que** les moyens d'assemblage (11 à 14) sont configurés de telle manière que la partie de support (10) forme avec la partie de couplage (15) une unité manipulable de manière autonome.

9. Pièce à main dentaire selon l'une quelconque des revendications 7 ou 8, **caractérisée en ce que** la partie de support (10) comporte des moyens d'encliquetage, en particulier des ouvertures d'encliquetage (11, 12) et la partie de couplage (15) des moyens d'encliquetage correspondants, en particulier des saillies d'encliquetage (13, 14), qui s'engagent de façon détachable les uns dans les autres lors de l'assemblage.

10. Pièce à main dentaire selon l'une quelconque des revendications 6 et 7 à 9, **caractérisée en ce que** la douille de prise (5) coopère avec la douille extérieure (18) par les moyens d'assemblage (16), de telle manière que l'assemblage entre la partie de support (10) et la partie de couplage (15) soit assuré par serrage de la partie de couplage (15) contre la partie de support (10).

11. Pièce à main dentaire selon l'une quelconque des revendications 1 à 10, **caractérisée en ce qu'**une sécurité contre la rotation (30, 31) est disposée entre la partie de tête (1) et la douille de prise (5) .

12. Pièce à main dentaire selon la revendication 11, **caractérisée en ce que** la sécurité contre la rotation (30, 31) est rendue étanche, de préférence au moyen d'un joint d'étanchéité (6) disposé entre la partie de tête (1) et la douille de prise (5).

13. Pièce à main dentaire selon l'une quelconque des revendications 11 ou 12, **caractérisée en ce que** la sécurité contre la rotation (30, 31) est disposée sous la forme d'un assemblage à rainure et languette entre une tige de la partie de tête et une extrémité de la douille de prise, la rainure (31) étant de préférence disposée dans la douille de prise (5) et la languette (30) dans la tige (20).

14. Pièce à main dentaire selon l'une quelconque des revendications 4 à 13, **caractérisée en ce que** le joint d'étanchéité (6) est formé, entre la partie de tête et la douille de prise, par un joint radial qui s'applique par son côté intérieur sur une face extérieure d'une tige (20) de la partie de tête (1) et par son côté extérieur sur une face intérieure de la douille de prise (5), dans laquelle le joint d'étanchéité (6) est espacé en direction axiale par rapport à une butée axiale de la partie de tête (1) et/ou par rapport à une butée axiale de la pièce de prise (5).

15. Pièce à main dentaire selon l'une quelconque des revendications 1 à 14, **caractérisée en ce qu'**un guide de lumière (7) s'étend à l'intérieur de la douille de prise (5), de la partie de support (10) à la partie de tête (1), lequel est maintenu élastiquement et rendu étanche à son point de sortie de lumière (25) et **en ce qu'**il est prévu un moyen d'ajustement (19), disposé à l'intérieur de la douille de prise (5), à régler à partir de la partie de support (10), pour la position d'une face de sortie de lumière (25) du guide de lumière (7).

16. Pièce à main dentaire selon la revendication 15, **caractérisée en ce que** le dispositif d'ajustement (19) est maintenu de façon mobile longitudinalement dans la douille de prise (5) contre la partie de tête (1) et/ou contre un prolongement de la partie de tête et peut être modifié, en ce qui concerne sa position par rapport à la partie de tête (1), au moyen d'un dispositif de réglage, dans laquelle la position de la face de sortie de lumière (25) du guide de lumière (7) est modifiée en position angulaire et dès lors en distance par rapport à la paroi extérieure de la douille de prise (5).
